# EUROPEAN PATENT APPLICATION

(11) **EP 4 783 598 A1**
(43) Date of publication of application: **29.07.2026**
(21) Application number: 26152442.5
(22) Date of filing: 16.01.2026
(51) Int. Cl.: H04N 23/617, H04N 23/63, H04N 23/667, H04N 23/73

(54) **IMAGE CAPTURE APPARATUS AND CONTROL METHOD THEREOF**

(30) Priority: 24.01.2025 JP 2025010639
(71) Applicant: Canon Kabushiki Kaisha, Tokyo, 146-8501 (JP)
(72) Inventor: IMAYA, Shu, Tokyo, 146-8501 (JP)
(74) Representative: Canon Europe Limited

(57) **Abstract**

An image capture apparatus (1) comprises an image sensor (2) and a display device (6). The apparatus (1) generates, from an image captured by the image sensor (2), an image for display and generates, using a machine learning model, a predicted image predicting an image that would be captured later than the images of the plurality of frames. The apparatus (1) causes the display device (6) to display the image for display or the predicted image so as the display unit to function as an electronic viewfinder. The apparatus (1) determines that the predicted image is to be generated if it is determined that an exposure time for still image capturing is longer than a predetermined time, and otherwise determines that the predicted image is not to be generated.

## Description

### TECHNICAL FIELD

The present disclosure relates to an image capture apparatus and a control method thereof.

### BACKGROUND

In an image capture apparatus that includes an electronic viewfinder (EVF), an image for display in the EVF cannot be obtained while the image sensor is exposed for capturing an image for recording. For that reason, when the exposure time is long (the shutter speed is slow), a phenomenon called blackout, in which no image is displayed in the EVF, may occur, which may cause a problem.

Japanese Patent Laid-Open Publication No. 2020-48185 proposes a technique according to which, in a wearable device that continuously implements both image capturing with a built-in image capture apparatus and image display, an image predicted from a captured image using artificial intelligence (Al) is displayed in order to reduce the time difference from capturing to display.

### SUMMARY

However, the technique proposed by Japanese Patent Laid-Open Publication No. 2020-48185 adopts a configuration in which images are constantly predicted while the wearable device is in use, and therefore requires high power consumption and is generally difficult to implement with a battery-operated image capture apparatus.

The present disclosure, in some embodiments thereof, provides an image capture apparatus capable of appropriately generating an image for display in an electronic viewfinder during exposure, while also suppressing power consumption, and a control method thereof.

The present disclosure in its first aspect provides an image capture apparatus as specified in claim 1. Optional features are specified in claims 2 to 8.

The present disclosure in its second aspect provides a control method as specified in claim 9. Optional features are specified in or derivable from claims 2 to 8.

The present disclosure in its third aspect provides a computer program as specified in claim 10. Optional features are specified in or derivable from claims 2 to 8.

Features of the present disclosure will become apparent from the following description of embodiments with reference to the attached drawings. The following description of embodiments is described by way of example.

### BRIEF DESCRIPTION OF THE DRAWINGS

Fig. 1 is a cross-sectional view showing an example of a configuration of an image capture apparatus according to an embodiment.
Fig. 2 is a block diagram showing an example of a functional configuration of an image capture apparatus according to a first embodiment.
Fig. 3 is a schematic diagram for illustrating an operation of the image capture apparatus in the first embodiment.
Fig. 4 is a flowchart relating to the operation of the image capture apparatus in the first embodiment.
Fig. 5 is a block diagram showing an example of a functional configuration of an image capture apparatus according to a second embodiment.
Fig. 6 is a flowchart relating to an operation of the image capture apparatus in the second embodiment.
Fig. 7 is a block diagram showing an example of a functional configuration of an image capture apparatus according to a third embodiment.
Figs. 8A and 8B are flowcharts relating to an operation of the image capture apparatus in the third embodiment.
Figs. 9A and 9B are flowcharts relating to another operation of the image capture apparatus in the third embodiment.
Fig. 10 is a schematic diagram for illustrating an operation of the image capture apparatus in the third embodiment.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

Note that the following describes a digital camera as an example of an image capture apparatus according to an embodiment. However, the image capture apparatus according to the embodiment may be any electronic device having an image capturing function. Such electronic devices include a video camera, a computer device (a personal computer, a tablet computer, a media player, a PDA, etc.), a smartphone, a game console, a robot, a drone, a drive recorder, and so forth. These are merely examples, and the image capture apparatus according to the embodiment may be any other electronic device.

### First Embodiment

### Configuration of Digital Camera

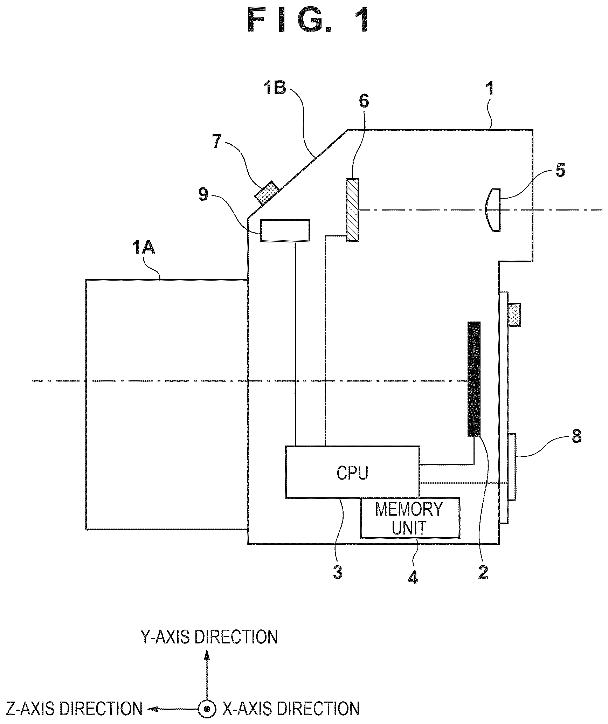

Fig. 1 is a diagram showing a YZ cross section, including an optical axis, of a digital camera 1 according to an embodiment of the present disclosure. The digital camera 1 is a lens-replaceable camera, and an image capture lens 1A is a lens unit that is attachable to and detachable from a camera body 1B. In the current embodiment, the image capture lens 1A includes a focus lens for adjusting the focal distance, a movable member such as an aperture, and a motor, an actuator, or the like that drives the movable member, but in other embodiment the components of image capture lens may be different. The aperture may have the function of a mechanical shutter. A CPU 3 controls the operations of the focus lens and the aperture.

An image sensor 2 is disposed so as to capture an optical image formed by the image capture lens 1A of the digital camera 1. The image sensor 2 may be a known CCD or CMOS color image sensor including a color filter based on a primary-color Bayer array, for example. The image sensor 2 includes a pixel array in which a plurality of pixels are arrayed two-dimensionally, and a peripheral circuit for reading out signals from the pixels. Each pixel accumulates electric charges corresponding to the amount of incident light through photoelectric conversion. By reading out, from each of the pixels, a signal having a voltage corresponding to the amount of electric charges accumulated during an exposure time, a group of pixel signals (analog image signals) representing a subject image formed by the image capture lens 1A can be obtained. In the present embodiment, the image sensor 2 includes an A/D converter, and image data obtained by A/D converting the analog image signals is output. However, the A/D conversion may be implemented by an external circuit such as the CPU 3.

The CPU 3 is one or more processors capable of executing a program. The CPU 3 is a control unit of the digital camera 1, and realizes the function of the digital camera 1, for example, by reading a program stored in a non-volatile memory included in a memory unit 4 into a RAM included in the memory unit 4, and executing the program.

The memory unit 4 includes a rewritable non-volatile memory and a RAM. The non-volatile memory stores a program that can be executed by the CPU 3, set values, GUI data, and so forth. The non-volatile memory is also used as a recording destination of a captured image. The RAM is used for, for example, reading a program to be executed by the CPU 3, saving values required during execution of the program, and temporarily storing a captured image.

A display device may be provided. The display device may be or comprise an electronic viewfinder. The display device 6 and an eyepiece 5 may constitute the electronic viewfinder and configured to be looked through from the outside of the camera body 1B. The display device 6 is capable of two-dimensional dot matrix display. The CPU 3 realizes the function of the electronic viewfinder by continuously causing the image sensor 2 to capture a moving picture, and the display device 6 to display the captured moving picture while the digital camera 1 is operating in a capturing mode. Note that the display device 6 is not limited to being disposed within the camera body 1B, and may be configured to be provided on the surface of a casing of the camera body 1B. That is, the electronic viewfinder need not be a look-through electronic viewfinder.

An operation unit 8 is a generic term for input devices (a button, a switch, a dial, etc.) provided for a user to input various instructions to the digital camera 1. For the sake of convenience, of the input devices constituting the operation unit 8, only one input device provided on the back surface of the body and a release button 7 are shown in Fig. 1.

The input devices constituting the operation unit 8 have names corresponding to the functions assigned thereto. For example, the operation unit 8 includes the release button 7, a moving picture recording switch, a capturing mode selection dial for selecting a capturing mode, a menu button, a direction key, an enter key, and so forth. The release button 7 is a still image recording switch, and the CPU 3 recognizes a half-pressed state (ON of a first switch (SW1)) of the release button 7 as a capturing preparation instruction, and a fully-pressed state (ON of a second switch (SW2)) as a capturing start instruction. In addition, the CPU 3 recognizes pressing of the moving picture recording switch in a capturing standby state as an instruction to start recording of a moving picture, and recognizes pressing thereof while recording a moving picture as a recording stop instruction. Note that the function assigned to the same input device may be variable. The input device may be a software button or key that uses a touch display. The operation unit 8 may include an input device corresponding to a non-contact input method such as audio input and gaze input.

An inertial sensor 9 may be provided. The inertial sensor may include at least one of an acceleration sensor and a gyrosensor. The inertial sensor 9 detects, as motion information of the digital camera 1, acceleration information in X-, Y-, and Z-axis directions, and angular velocity information about the X, Y, and Z axes. The motion information of the digital camera 1 is acquired by the CPU 3 from the inertial sensor 9 in a predetermined cycle, and stored in the memory unit 4. The inertial sensor 9 may be used for an image stabilization function.

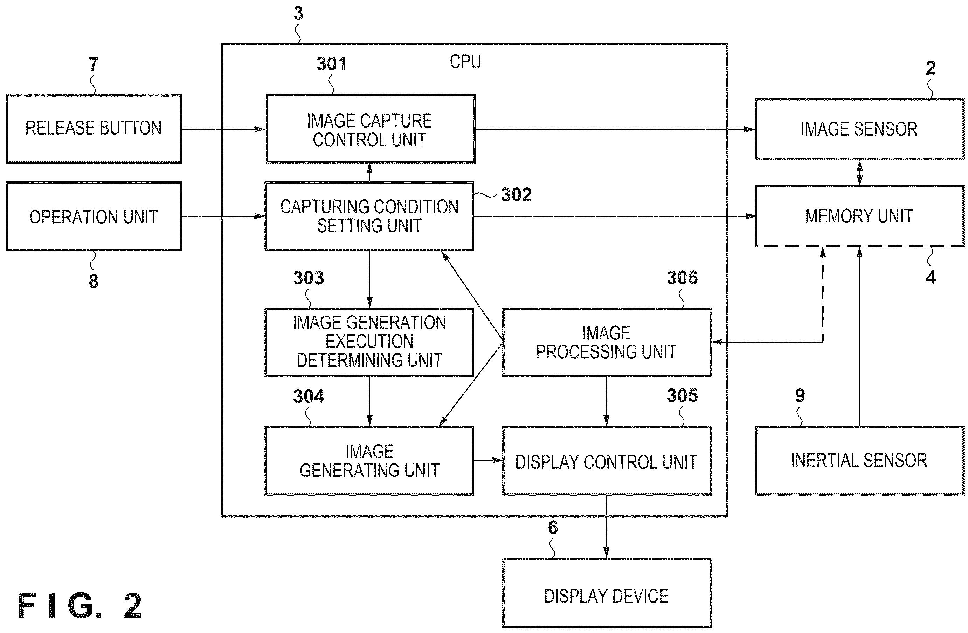

Fig. 2 is a block diagram for illustrating the functions of the CPU 3, in which the same reference numerals are assigned to constituent elements that are the same as those in Fig. 1. The functional block of the CPU 3 schematically shows functions realized by the CPU 3 executing programs. Therefore, the details described below as the operations of the functional block are actually implemented by the CPU 3 acting as an agent. Note that the functional block need not necessarily be implemented by the CPU 3 executing programs, and may be implemented using a hardware circuit (e.g., a GPU, a NCU, an ASIC, or the like) other than the CPU 3, as needed.

An image capture control unit 301 generates a signal for controlling the operation of the image sensor 2 according to the state (SW1: ON, SW2: ON, SW1 and SW2: OFF) of the release button 7, and the capturing condition.

A capturing condition setting unit 302 determines capturing conditions (shutter speed (exposure time), aperture value, capturing sensitivity), based on settings input through the operation unit 8. The capturing condition setting unit 302 outputs the determined capturing conditions to an image generation execution determining unit 303, and stores the capturing conditions in the RAM of the memory unit 4. Note that the capturing condition setting unit 302 may determine the capturing conditions based on, in addition to or in place of the settings provided through the operation unit 8, an evaluation value of AE that is generated by an image processing unit 306 from the image captured by the image sensor 2.

Based on a shutter speed (exposure time) among the capturing conditions determined by the capturing condition setting unit 302, the image generation execution determining unit 303 determines whether to generate an image for display in the next still image capturing.

If it is determined, by the image generation execution determining unit 303 that an image for display is generated during the next still image capturing, an image generating unit 304 generates an image to be displayed on the display device 6 during exposure in the next still image capturing. The details of the operation of the image generating unit 304 will be described later.

A display control unit 305 performs control to display, on the display device 6, the image generated by the image processing unit 306, or the image generated by the image generating unit 304. The details of the operation of the display control unit 305 will be described later.

The image processing unit 306 applies predetermined image processing to the image data stored in the memory unit 4, thus generating a signal and image data corresponding to the use, and obtaining and/or generating various types of information.

The image processing applied by the image processing unit 306 may include, for example, pre-processing, color interpolation processing, correction processing, detection processing, data processing, evaluation value calculation processing, special effects processing, and so forth.

Pre-processing may include signal amplification, reference level adjustment, defective pixel correction, and so forth.

Color interpolation processing is executed in a case where the image sensor is provided with color filters, and interpolates the values of color components not included in the individual pieces of pixel data constituting image data. Color interpolation processing is also called demosaicing.

Correction processing may include processing such as white balance adjustment, tone correction, correction (image recovery) of image degradation resulting from optical aberrations of an imaging optical system included in the image capture lens 1A, correction of the influence of limb darkening of the imaging optical system, color correction, and so forth.

Detection processing may include detection of a feature region (e.g., a face region or a body region) and motion thereof, person recognition processing, and so forth.

Data processing may include processing such as region clipping (trimming), combining, scaling, encoding and decoding, header information generation (data file generation), and so forth. Generation of data of an image for display and data of an image for record is also included in data processing. Data of an image for display includes data of an image for EVF that is displayed on the display device 6. Data of an image for display is generated so as to correspond to the characteristics (resolution, brightness dynamic range, display frame rate, etc.) of a display apparatus that displays the data.

Evaluation value calculation processing may include processing such as generation of signals and evaluation values used for auto focus detection (AF), and generation of evaluation values used for auto exposure control (AE).

Special effects processing can include processing such as application of a blur effect, changing of color tone, and relighting.

Note that these are merely examples of processing that can be applied by the image processing unit 306, and are not intended to limit the processing applied by the image processing unit 306.

Note that Fig. 2 illustrates that the inertial sensor 9 directly stores the motion information in the memory unit 4. However, actually, the CPU 3 cyclically acquires the motion information from the inertial sensor 9, and stores the motion information in the memory unit 4.

### Description of an Example Operation During Still Image Capturing

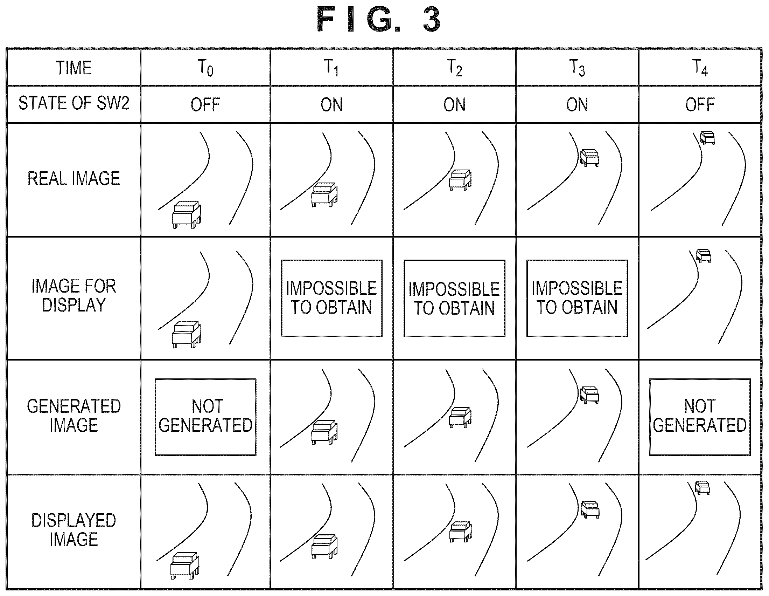

Fig. 3 is a diagram schematically showing changes over time between capturing scenes and images for display generated by the digital camera 1 in a period during which still image capturing has been implemented in a capturing standby state and the states returns to the capturing standby state. Times T₁ to T₄ are times at which every predetermined unit time (e.g., 1/120 second) has elapsed from time T₀. The unit time may be, for example, a reciprocal of the display frame rate of the EVF (display device 6).

In a capturing standby state, the CPU 3 is executing operations required to cause the electronic viewfinder to function. Specifically, the CPU 3 controls the operation of the digital camera 1 so as to continuously perform:
· capturing of a moving picture by the image sensor 2
· generation of an image for EVF based on the moving picture obtained by the capturing
· display of the image for EVF on the display device 6

When the SW2 of the release button 7 is turned on between the time T₀ and the time T₁, the image capture control unit 301 controls the operation of the image sensor 2 such that the image sensor 2 performs still image capturing in accordance with the capturing condition determined by the capturing condition setting unit 302. In addition, the CPU 3 also controls the operation of the focus lens or the aperture, as needed.

Assume that the exposure time has expired between the time T₃ and the time T₄. Note that, for the sake of convenience, Fig. 3 illustrates that the SW2 is on from the times T₁ to the T₃. However, if the mode is not a continuous capturing mode, the state of the SW2 after the SW2 has been first turned on is not taken into operational consideration.

The image sensor 2 is occupied during exposure in the still image capturing. Accordingly, an image for EVF display can be generated by capturing a real image at the time T₀ prior to the exposure and the time T₄ subsequent to the exposure. However, an image for EVF display cannot be generated based on a real image during a period from the times T₁ to T₃.

Therefore, based on the past images of a plurality of frames, including the image at the time T₀ captured immediately prior to the exposure, the CPU 3 (image generating unit 304) generates predicted images obtained by predicting captured images at the times (times T₁ to T₃) during the exposure that are subsequent to the capturing time T₀. Then, at the times T₁, T₂, and T₃, the display control unit 305 displays the predicted images generated by the image generating unit 304 as images for EVF display on the display device 6.

In this manner, the digital camera 1 of the present embodiment generates, based on the past images, images for EVF display to be displayed during exposure in the still image capturing, and displays the images for EVF display on the display device 6. Accordingly, even in a case where the exposure time in the still image capturing extends across the display timing of the EVF, it is possible to continue the display of the display device 6, and also to display appropriate images closer to real images than in a case where the past images are continuously displayed.

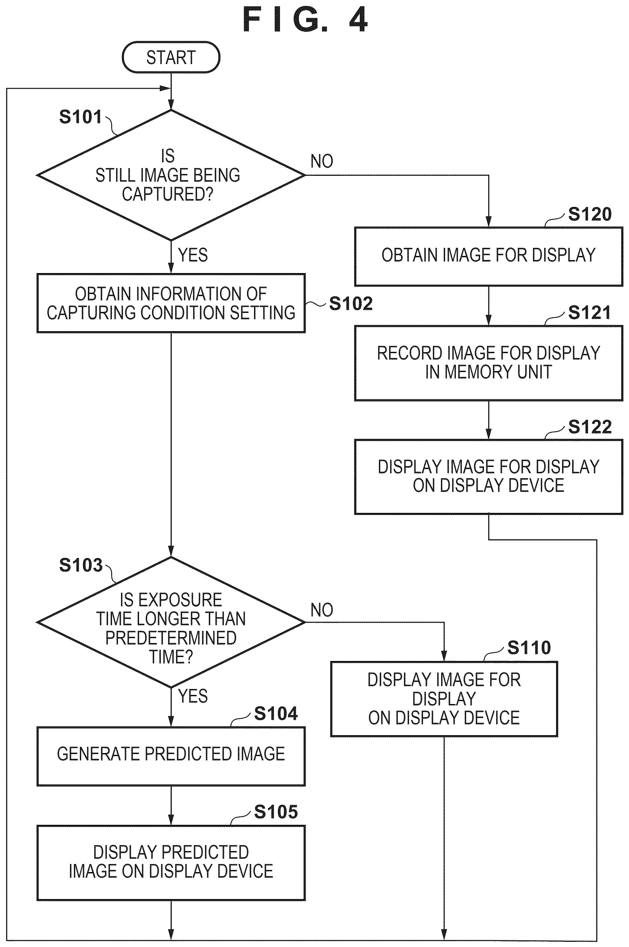

Fig. 4 is a flowchart for illustrating the operation of the CPU 3 relating to an EVF display operation when the digital camera 1 is operating in a capturing mode, instead of operating in a reproduction mode. The CPU 3 continuously executes the operation illustrated in the flowchart of Fig. 4 in a cycle corresponding to the display frame rate of the EVF, in parallel with other operations such as an operation for performing still image capturing.

In S101, the CPU 3 determines whether an image for recording is being captured. During a period from when the SW2 of the release button 7 has turned on to the completion of the exposure, the CPU 3 determines that an image for recording is being captured. The CPU 3 executes S102 if it is determined that an image for recording is being captured, and executes S120 if it is not thus determined.

In S120, the CPU 3 causes moving picture capturing for generating an image for EVF display to be continuously performed, and the image sensor 2 stores image data of one frame in the RAM of the memory unit 4. Then, the image processing unit 306 generates image data for EVF display based on the image data read out from the memory unit 4.

In S121, the image processing unit 306 stores the generated data of an image for display in the RAM of the memory unit 4. The image processing unit 306 deletes old image data as needed such that data of images for display of a plurality of predetermined immediate frames is stored in the RAM of the memory unit 4. The motion information (measured value of the inertial sensor 9) of the digital camera 1 at the time of capturing the data of images for display of a plurality of predetermined frames is also stored in the RAM of the memory unit 4.

In S122, the display control unit 305 causes the display device 6 to display the data of images for display read out from the memory unit 4, and ends the processing for one frame.

In S102, the image generation execution determining unit 303 acquires capturing conditions from the capturing condition setting unit 302, and executes S103. When, for example, the SW1 of the release button 7 is turned on, the capturing condition setting unit 302 assumes that capturing conditions are continuously determined based on evaluation values for AE generated by the image processing unit 306.

In S103, the image generation execution determining unit 303 determines whether the shutter speed (exposure time) among the capturing conditions acquired in S102 is longer than a predetermined time. The image generation execution determining unit 303 executes S104 if it is determined that the exposure time is longer than the predetermined time, and executes S110 if it is not thus determined. In other words, the image generation execution determining unit 303 determines to generate a predicted image by the image generating unit 304 if the exposure time is longer than the predetermined time, and determines not to generate a predicted image by the image generating unit 304 if the exposure time is not longer than the predetermined time.

Note that the execution of S102 may be skipped for the second and subsequent executions while an image for recording is being captured. In S103, the image generation execution determining unit 303 determines whether the remaining exposure time is longer than a predetermined time.

In S110, the display control unit 305 causes the display device 6 to display the image data for EVF display generated in the processing for the previous frame in S121, and ends the processing for one frame.

In S104, the image generating unit 304 generates a predicted image based on the image data for EVF display stored in the memory unit 4. In the case of taking the motion of the digital camera 1 into consideration, the image generating unit 304 generates a predicted image also using the motion data stored in the RAM of the memory unit 4. The image generating unit 304 generates a predicted image by inputting the image data for EVF display into a learned machine learning model. By generating a predicted image using a machine learning model, it is possible to generate a predicted image taking into consideration the type and the orientation of the object, and the environment (the road shape, etc.) in which the object is present.

The machine learning model may be a generative model using, for example, a convolutional neural network (CNN), a generative adversarial network (GAN), or a Transformer layer. In the following, a CNN is used as an example.

Here, a configuration and a learning method of the machine learning model used for the generation of a predicted image will be described. As the machine learning model, a machine learning model may be provided for each type of capturing scene in which the moving object is present, such as sports, motor sports, or animals. In the case of providing the machine learning model according to the capturing scene, the image processing unit 306 detects an object and motion thereof for the image data being used for EVF display in a capturing standby state, and determines a capturing scene. Then, the image generating unit 304 generates a predicted image using the machine learning model according to the capturing scene most recently determined by the image processing unit 306.

As the learning data of the machine learning model, a moving picture captured at a frame rate equal to the display frame rate of the EVF is used. Here, the machine learning model is configured such that, when images of a plurality of frames are input, a predicted image of the subsequent frame is output. However, the machine learning model may be configured such that, when images of a plurality of frames are input, predicted images may be generated for a plurality of subsequent frames.

The motion information of the camera may be used for learning of the machine learning model. The use of the motion information of the camera can increase the accuracy of a predicted image when the camera moves during exposure, as in the case of panning shot.

Specifically, a machine learning model has learned using a moving picture captured while the camara is being panned as in the case of panning shot, and motion information of the camera while capturing this moving picture. In this case, using the moving picture as input data of the CNN that realizes the machine learning model, the motion information may be input to the same layer as an output of the CNN, and used as a feature amount in a connected layer together with the output of the CNN.

The learning is supervised learning, and an image (or images) of the subsequent frame (or a plurality of subsequent frames) of a plurality of frame images used as the training data is used as the teaching data. Then, the CNN is subjected to learning by updating parameters of the CNN using a gradient descent method or Adaptive Moment Estimation (Adam) so as to reduce the error between the predicted image generated for the training data and the teaching data. Also, the learning may be performed using a configuration of a GAN in which an identifier configured to determine whether an image is a predicted image is connected in a later stage of a generator.

The image generating unit 304 generates a predicted image by inputting, into the machine learning model that has be subjected to learning in the above-described manner, the data of images for display stored in the RAM of the memory unit 4 (and also motion data, in the case of taking the motion of the digital camera 1 into consideration).

In S105, the display control unit 305 causes the display device 6 to display the image data of the predicted image that has been generated by the image generating unit 304 in S104, and ends the processing for one frame.

According to the present embodiment, an image to be displayed in the EVF while a still image is being captured is generated using a machine learning model. Accordingly, it is possible to suppress blackout of the EVF display during still image capturing. Since image generation using a machine learning model is implemented only if the shutter speed (exposure time) during still image capturing is longer than a predetermined time, it is possible to suppress power consumption, which is suitable for implementation with a battery-driven apparatus such as an image capture apparatus. By using the motion information of the camera, it is possible to more accurately generate an image to be displayed in the EVF during panning shot.

### Second Embodiment

Next, a second embodiment will be described. In the present embodiment, whether to generate a predicted image, taking into consideration, a capturing mode, in addition to an exposure time.

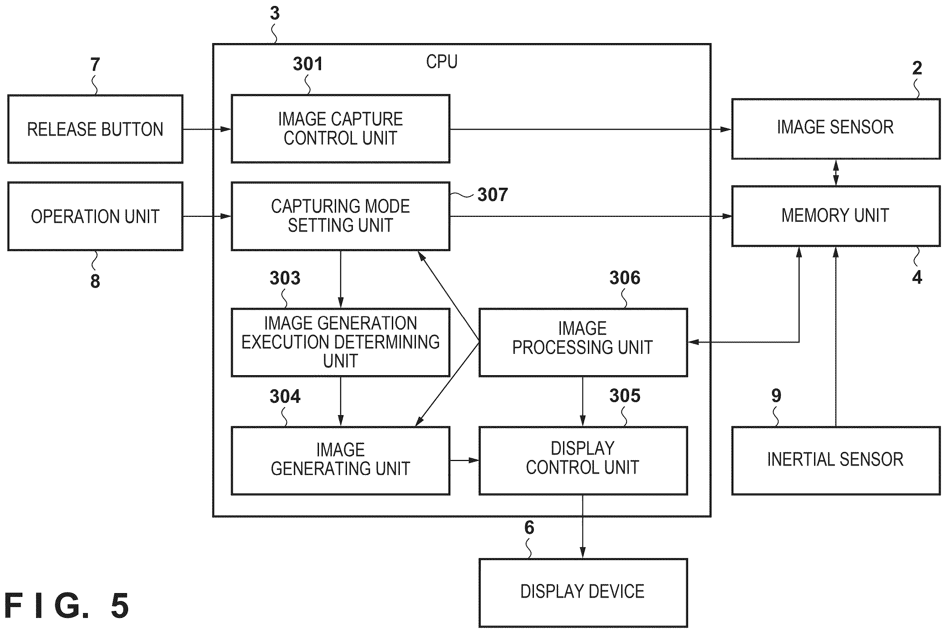

Fig. 5 is a block diagram showing an example of a functional configuration of a digital camera 1 according to the present embodiment, and the same reference numerals as those in Fig. 2 are assigned to components that are the same as those in the first embodiment. In the present embodiment, the CPU 3 has the function of a capturing mode setting unit 307. Note that, although the capturing mode setting unit 307 is shown in place of the capturing condition setting unit 302 in Fig. 2, the function corresponding to the capturing condition setting unit 302 has not been omitted, but is still included in the functions executed by the CPU 3.

A capturing mode in the present embodiment is different from the capturing mode in the first embodiment. The capturing mode in the first embodiment is used in a pair with a reproduction mode, and means an operating mode in which a moving picture or a still image can be captured.

On the other hand, the capturing mode in the present embodiment is a mode relating to setting of capturing conditions during still image capturing. Specifically, this capturing mode is a mode in which capturing conditions suitable for capturing a specific object are collectively set in the digital camera 1, or a mode in which one or both of an aperture and a shutter speed can be changed by the user. The former includes a sports mode, a night scene mode, a portrait mode, and so forth, and the latter includes a shutter speed priority mode, an aperture priority mode, a manual mode, a bulb mode, and so forth. These are merely examples, and the type of the capturing mode may differ according to the camera.

The capturing mode can be set by the user through, for example, a capturing mode setting dial included in the operation unit 8, a menu screen operable through the operation unit 8, or the like. The setting by the user is not essential, and the capturing mode may be automatically set by the CPU 3 according to, for example, a result of detection of the type, the motion, or the like of the object that is performed by the image processing unit 306. In the present embodiment, it is assumed that the setting of the capturing mode is stored in the RAM of the memory unit 4 as one of the current set values.

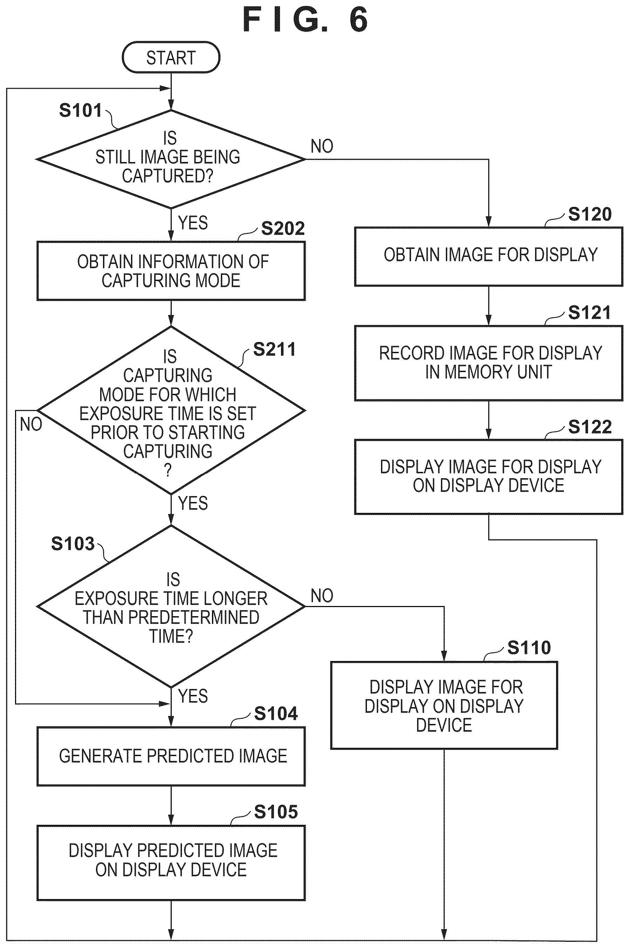

Fig. 6 is a flowchart for illustrating the operation of the CPU 3 relating to an EVF display operation of the digital camera 1 according to the present embodiment. In Fig. 6, the same reference numerals are assigned to steps in which the same operations as those in the first embodiment are executed, and the descriptions thereof have been omitted.

In S202, the image generation execution determining unit 303 acquires information relating to the currently set capturing mode from the memory unit 4. In some embodiments, the image generation execution determining unit 303 may acquires capturing conditions as well acquiring information relating to the currently set capturing mode. Put another way, capturing conditions may comprise information relating to a currently set capturing mode.

In the subsequent S211, the image generation execution determining unit 303 determines whether the currently set capturing mode is a capturing mode in which the exposure time is fixed prior to capturing. For example, a capturing mode in which the exposure time may change after starting capturing depending on the status of a scene, and a capturing mode, such as a bulb mode, in which the exposure time is unfixed are capturing modes in which the exposure time is not fixed prior to capturing. On the other hand, for example, a shutter speed priority mode and a manual mode are capturing modes in which the exposure time is fixed prior to capturing.

The image generation execution determining unit 303 executes S103 if it is determined that the currently set capturing mode is a capturing mode in which the exposure time is fixed prior to capturing, and executes S104 if it is not thus determined. In other words, the image generation execution determining unit 303 determines to generate a predicted image by the image generating unit 304 if the currently set capturing mode is a capturing mode in which the exposure time is not fixed prior to capturing. The image generation execution determining unit 303 determines whether to generate a predicted image by the image generating unit 304 according to the length of the exposure time if the currently set capturing mode is a capturing mode in which the exposure time is fixed prior to capturing.

The other steps are the same as those in the first embodiment, and therefore the descriptions thereof have been omitted. Note that the set length of the exposure time is evaluated in S103 in the first embodiment and the present embodiment. However, for example, if there is a capturing mode (referred to as a first capturing mode) in which it is determined to use an exposure time longer than a predetermined time, the length of the exposure time may be indirectly evaluated by determining whether the first capturing mode is set. Examples of the first capturing mode include capturing modes, such as a night scene mode and a slow sync mode, in which a slow shutter is used.

According to the present embodiment, a predicted image is generated if it is not possible to determine whether the exposure time is longer than a predetermined time before starting capturing, thus making it possible to suppress blackout of EVF display even if the exposure time becomes longer than the predetermined time.

### Third Embodiment

Next, a third embodiment will be described. In the present embodiment, a predicted image on which position information of an object is superimposed is generated.

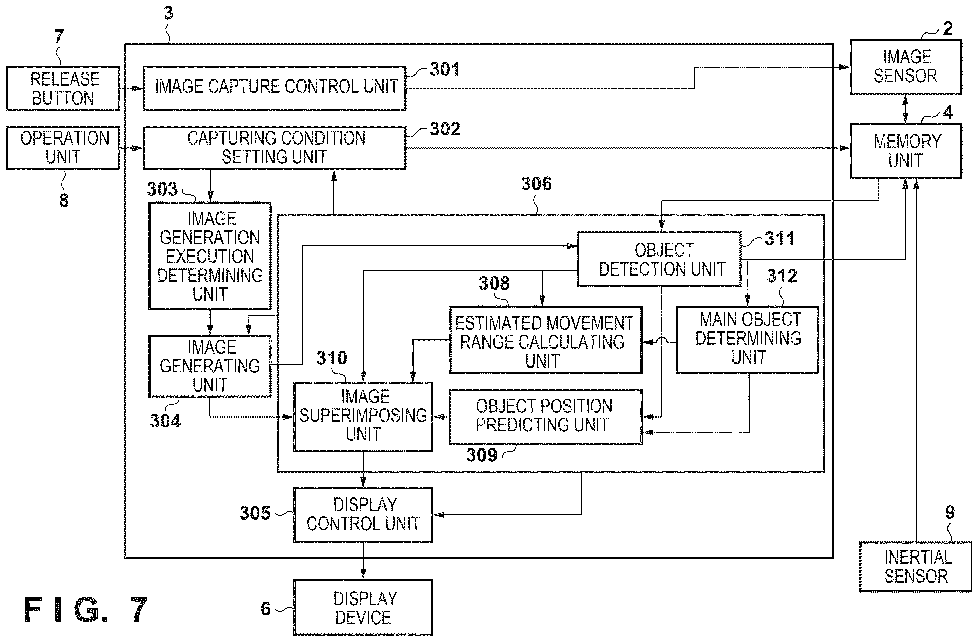

Fig. 7 shows a block diagram showing an example of a functional configuration of a digital camera 1 according to the present embodiment. The same reference numerals as those in Fig. 2 are assigned to components that are the same as those in the first embodiment, and the descriptions thereof have been omitted. Characteristic functions implemented by the image processing unit 306 in the present embodiment are illustrated as individual functional blocks. It should be noted that not all the functions executed by the image processing unit 306 are illustrated as the functional blocks, and the image processing unit 306 is still capable of executing the above-described various functions. The operations of the functional blocks within the image processing unit 306 are actually executed by the CPU 3 acting as an operating agent.

An object detection unit 311 detects, from a captured image, a main object corresponding to the capturing scene. Specifically, the main object is an object such as an automobile in the case of a car sports scene, and a human body in the case of a sports scene. The object detection unit 311 stores, in the RAM of the memory unit 4, information indicating the position and the size of the region of the detected object. In addition, based on the positions of objects in frame images at different capturing times, the object detection unit 311 detects motion information (movement direction and speed) for each of the detected objects.

A main object determining unit 312 determines, as a main object, one object from the objects detected by the object detection unit 311. Note that when a plurality of objects of the same kind are present, a main object can be determined by a known method, such as by considering the size and the position in the screen. In the present embodiment, a predicted image on which the position information of the main object is superimposed is generated.

Using the information of the position and the motion detected by the object detection unit 311 for the region of the main object determined by the main object determining unit 312, an estimated movement range calculating unit 308 specifies a range in which the main object is estimated to be actually present in the predicted image generated by the image generating unit 304. The estimated movement range calculating unit 308 calculates, based on the change in movement direction and movement speed of the past main object, a movement probability for coordinates of a movement trajectory of the main object within a predetermined range of the image. Then, the estimated movement range calculating unit 308 specifies, as the estimated range, a range in which the calculated movement probability is greater than or equal to a predetermined value.

The movement trajectory of the main object can be predicted from the history of the position of the past main object region, using polynomial approximation or exponential approximation. For the prediction, only an approximation model with a low square error may be used, or a plurality of approximation models may be used.

A machine learning model capable of trajectory prediction, such as a long short-term memory (LSTM), may be used. In the case of using a LSTM, learning is performed using a training data set similar to the machine learning model for generating the predicted image. Specifically, using the history of the position (image coordinates) of the main object region detected by the object detection unit 306, positions at a plurality of times in the past can be used as training data, and a position at a time subsequent to the time of the training data can be used as teaching data. Also, a plurality of movement trajectories may be predicted using a plurality of LSTMs with different weight parameters. When a plurality of movement trajectories have been predicted, the estimated movement range calculating unit 308 calculates estimated ranges respectively corresponding to the individual movement trajectories.

The position of the main object in the predicted image generated by the image generating unit 304 is detected by the object detection unit 311. The estimated movement range calculating unit 308 calculates a square error between the position of the main object in the predicted image, and an estimated position calculated from the predicted movement trajectory. The estimated movement range calculating unit 308 calculates a standard deviation from time-series information of the square error, and determines, as an estimated movement range, the range of an estimated position included in a range in which the square error is less than or equal to a predetermined value when it is assumed that the square error obeys a normal distribution. Note that the position of the object region may be a position of the center of gravity, a position of one vertex, or a point of intersection of diagonal lines of a rectangular area in which the object region is inscribed.

An object position predicting unit 309 acquires information of the position and the motion detected in the past by the object detection unit 311 for the main object region determined by the main object determining unit 312, and the position of the object region in the predicted image generated by the image generating unit 304. Then, the object position predicting unit 309 predicts a movement trajectory of the main object within the image from the time corresponding to the predicted image generated by the image generating unit 304 to a predetermined time subsequent thereto.

An image superimposing unit 310 superimposes, on the predicted image generated by the image generating unit 304, at least one of: an indicator indicating the estimated range specified by the estimated movement range calculating unit 308; and an indicator indicating the movement trajectory predicted by the object position predicting unit 309, and outputs the resulting predicted image to the display control unit 305.

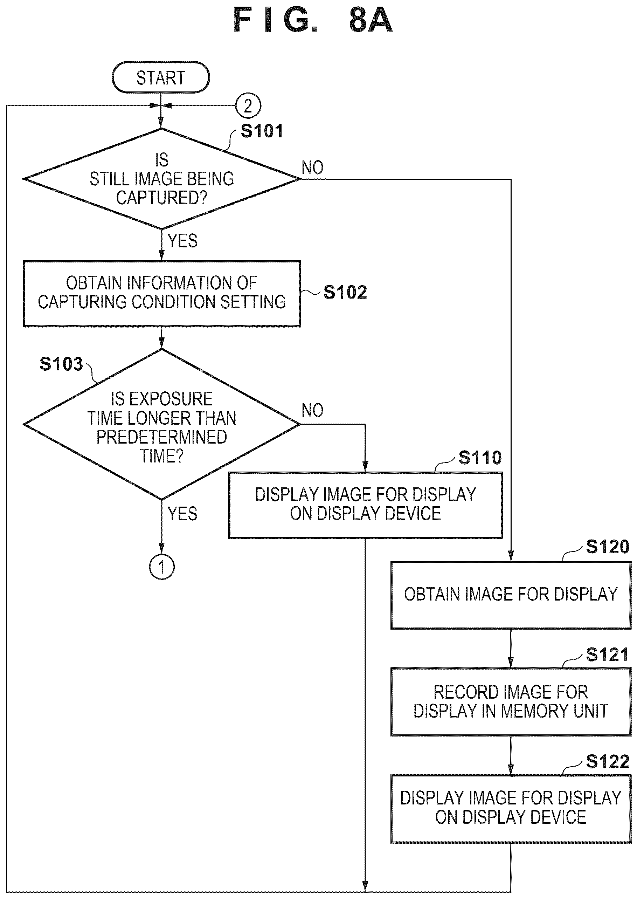

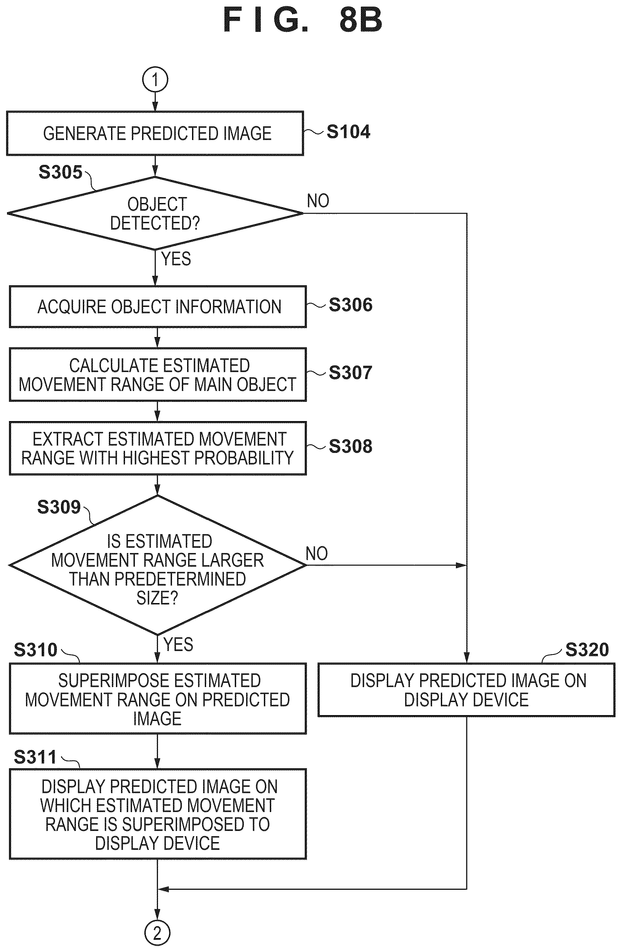

Figs. 8A and 8B are flowcharts for illustrating the operation of the CPU 3 relating to an EVF display operation of the digital camera 1 according to the present embodiment, and corresponds to the operation executed when an indicator indicating the estimated range is superimposed on the predicted image. The CPU 3 continuously executes the operation shown in Figs. 8A and 8B in a cycle corresponding to the display frame rate of the EVF, in parallel with other operations such as an operation for performing still image capturing. In Figs. 8A and 8B, the same reference numerals as those shown in Fig. 4 are assigned to steps in which the same operations as those in the first embodiment are executed, and the descriptions thereof have been omitted.

Note that, in Figs. 8A and 8B, the operations in and after S305 are described as being executed after the image generating unit 304 has generated a predicted image in S104. However, actually, the processing in and after S305 may be implemented in parallel with the generation of the predicted image performed in S104.

In S305, the CPU 3 determines whether an object is detected in the image for EVF display generated immediately prior to start of still image capturing, and the CPU 3 executes S306 if it is determined that an object is detected, and executes S320 if it is not thus determined. The CPU 3 can implement the determination, for example, by referring to the history of object detection results stored in the RAM of the memory unit 4.

In S306, the estimated movement range calculating unit 308 acquires information of the main object that has been determined by the main object determining unit 312, and the history of motion information (movement direction and speed) of the main object detected by the object detection unit 311.

In S307, the estimated movement range calculating unit 308 calculates an estimated range of the position in an image in which the main object is actually present, based on the position of the main object in the predicted image generated by the image generating unit 304, and the history of the position of the main object region detected prior to the start of capturing.

S308 is executed when a plurality of estimated ranges have been calculated, for example, when a plurality of movement trajectories have been calculated. The estimated movement range calculating unit 308 extracts the estimated range with the highest probability out of the plurality of estimated ranges. When only one estimated range has been calculated, S308 is skipped.

In S309, the estimated movement range calculating unit 308 determines whether the estimated range is larger than a predetermined size. The CPU 3 executes S310 if it is determined that the estimated range is larger than the predetermined size, and executes S320 if it is not thus determined. The size may be a pixel count (area), for example. If the estimated range is not larger than the predetermined size, this means that the accuracy of the position of the main object in the predicted image is high.

In S320, the image superimposing unit 310 directly outputs, to the display control unit 305, the predicted image generated by the image generating unit 304 in S104. Thus, the predicted image is displayed on the display device 6 through the display control unit 305, and the processing for the subsequent frame is started.

Since the accuracy of the position of the main object in the predicted image is high if the size of the estimated range is not large, the indicator of the estimated range will not be superimposed on the predicted image. Since unnecessary information is not provided to the user, it is possible to improve the usability.

In S310, the image superimposing unit 310 superimposes, on the predicted image generated by the image generating unit 304, an indicator indicating the estimated range calculated by the estimated movement range calculating unit 308, and outputs the resulting predicted image to the display control unit 305. The indicator may be, for example, the outline of an image showing the estimated range, but other display pattern may be used.

In S311, the display control unit 305 causes the display device 6 to display the predicted image on which the indicator indicating the estimated range is superimposed. Then, the CPU 3 starts the processing for the subsequent frame.

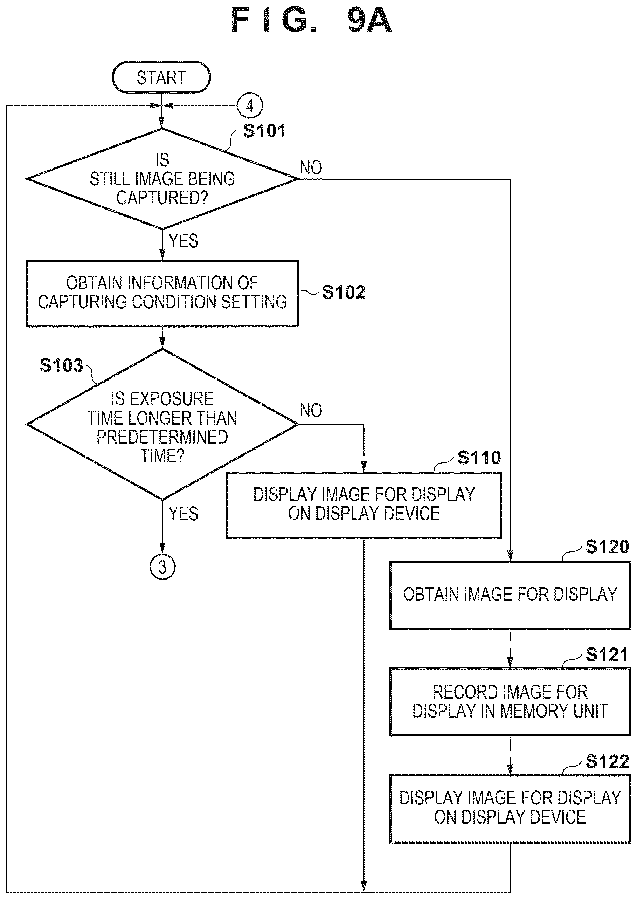

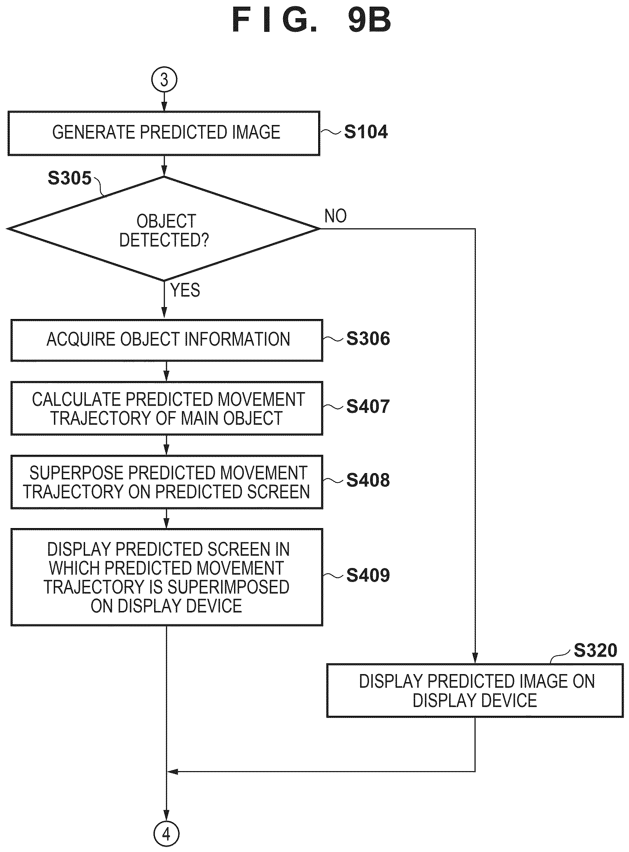

Figs. 9A and 9B are flowcharts for illustrating the operation of the CPU 3 relating to another EVF display operation of the digital camera 1 according to the present embodiment, and corresponds to the operation executed when an indicator indicating a predicted position of a main object is superimposed on a predicted image. The CPU 3 continuously executes the operation shown in the flowcharts of Figs. 9A and 9B in a cycle corresponding to the display frame rate of the EVF, in parallel with other operations such as the operation for performing still image capturing. In Figs. 9A and 9B, the same reference numerals as those in Fig. 4 are assigned to steps in which the same operations as those in the first embodiment are executed, the same reference numerals as those in Figs. 8A and 8B are assigned to steps in which the same operations as those in Figs. 8A and 8B, and the descriptions thereof have been omitted. Only steps that are unique to Figs. 9A and 9B will be described.

In S407, using the information of the position and the motion detected by the object detection unit 311 for the main object region, the object position predicting unit 309 predicts a position of the main object within an image at a time subsequent to the time corresponding to the predicted image generated by the image generating unit 304. Then, using the past information of the position and the motion of the main object, and the predicted position, the object position predicting unit 309 calculates a movement trajectory of the main object in the same manner as in the case of calculating the estimated range. Note, however, that the movement trajectory calculated here is a movement trajectory from the time corresponding to the predicted image to a predetermined time subsequent thereto.

In S408, the image superimposing unit 310 superimposes, on the predicted image generated by the image generating unit 304, an indicator indicating the movement trajectory calculated by the object position predicting unit 309, and outputs the resulting predicted image to the display control unit 305. The indicator may be, for example, a linear image indicating the movement trajectory, but other display patterns may be used.

In S409, the display control unit 305 causes the display device 6 to display the predicted image on which the indicator indicating the predicted movement trajectory of the main object is superimposed. Then, the CPU 3 starts the processing for the subsequent frame.

Note that, in Figs. 8A to 9B, a case where one of the estimated range and the predicted movement trajectory is superimposed on the predicted image is described. However, both the estimated range and the predicted movement trajectory may be superimposed. In that case, the processing in and after S307 of Fig. 8B and the processing in and after S407 of Fig. 9B may be executed in parallel. In this case, the image superimposing unit 310 may constantly superimpose the indicator of the predicted movement trajectory, and superimpose the indicator of the estimated range only if the size thereof is smaller than or equal to a predetermined size.

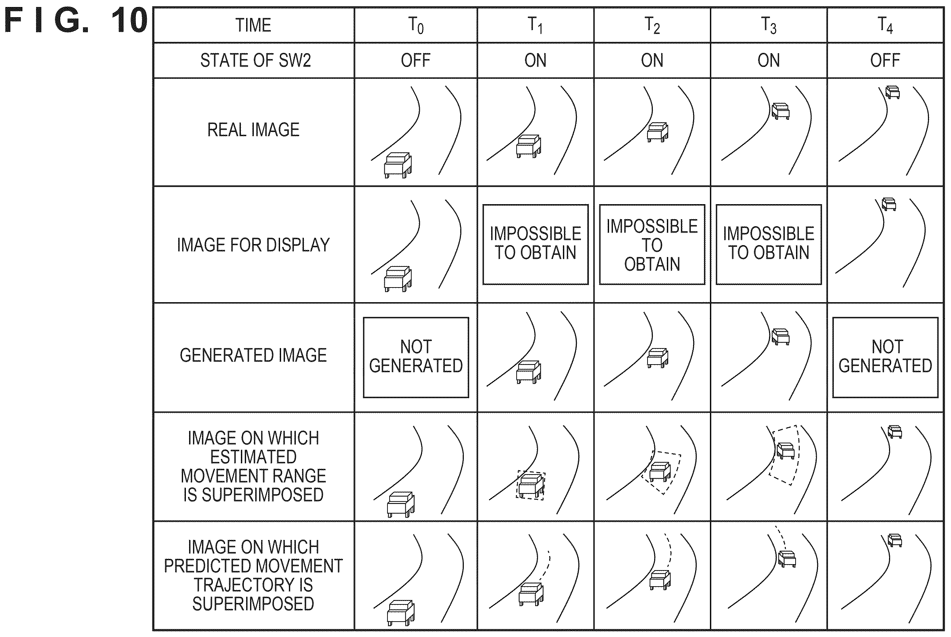

Fig. 10 is a diagram created by adding, to Fig. 3, predicted images on which an indicator of an estimated range in which a main object that can be generated in the present embodiment is actually present is superimposed, and predicted images on which an indicator of a future predicted movement trajectory of the main object is superimposed.

The size of the estimated range becomes larger as the accuracy of the predicted image is reduced. Accordingly, the longer the time elapsed after generation of the predicted image has been started, the larger the size of the estimated range becomes. However, the operator is able to know the position at which the main object can be present, and therefore can perform framing, taking the estimated range into consideration.

By superimposing the indicator indicating a future predicted movement trajectory of the main object, a guideline for panning the camera during panning shot is provided, thus improving the usability.

Note that the description is given herein based on the configuration of the first embodiment. However, the same indicators can also be superimposed on the predicted image in the configuration of the second embodiment.

According to the present embodiment, it is possible to achieve, in addition to the effects of the first and second embodiments, the effect of being able to support the operator in operating a camera during a period in which an image for EVF display cannot be captured.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not solely limited to these embodiments and encompasses all modifications, variants, alternatives and equivalents falling within the scope of the appended claims. Each of the embodiments of the present disclosure described can be implemented solely or as a combination of a plurality of the embodiments or features thereof where necessary or where the combination of elements or features from individual embodiments in a single embodiment is beneficial.

### Clauses

Below are a series of numbered clauses. The numbered clauses may represent one or more aspects or elements or features of the present disclosure.
1. An image capture apparatus (1) comprising:
   an image sensor (2);
   a display device (6);
   image processing means (302) for generating, from an image captured by the image sensor, an image for display that is to be displayed on the display device;
   generating means (304) for generating, using a machine learning model, a predicted image based on images of a plurality of frames captured by the image sensor, the predicted image predicting an image that would be captured later than the images of the plurality of frames;
   display control means (305) for causing the display device to display the image for display or the predicted image so as the display device to function as an electronic viewfinder; and
   determining means (303) for determining that the predicted image is to be generated by the generating means if it is determined that an exposure time for still image capturing is longer than a predetermined time, and determine that the predicted image is not to be generated by the generating means if it is determined that the exposure time is not longer than the predetermined time.
2. The image capture apparatus (1) according to clause 1, wherein
   the display control means (305) causes the display device (6) to display the predicted image while still image capturing is being performed, and causes the display device (6) to display the image for display if still image capturing is not being performed.
3. The image capture apparatus (1) according to clause 1 or clause 2, wherein
   the determining means (303) further determines whether a capturing mode set in the image capture apparatus (1) is a capturing mode in which an exposure time for still image capturing is determined prior to capturing,
   in a case where it is determined that the capturing mode set in the image capture apparatus (1) is the capturing mode in which the exposure time for still image capturing is determined prior to capturing,
   the determining means (303) determines that the predicted image is to be generated by the generating means (304) if it is determined that the exposure time is longer than a predetermined time, and determines that the predicted image is not to be generated by the generating means (304) if it is determined that the exposure time is not longer than the predetermined time, and
   in a case where if it is determined that the capturing mode set in the image capture apparatus (1) is not the capturing mode in which the exposure time for still image capturing is determined prior to capturing, the determining means (303) determines that the predicted image is to be generated by the generating means (304).
4. The image capture apparatus (1) according to clause 1 or clause 2, wherein
   the determining means (303) determines that the exposure time for still image capturing is longer than the predetermined time if a capturing mode in which image capturing is performed with an exposure time longer than the predetermined time is set in the image capture apparatus (1).
5. The image capture apparatus (1) according to any one of clauses 1 to 4, further comprising
   acquiring means (9) for acquiring information relating to motion of the image capture apparatus (1), wherein
   the generating means (304) generates the predicted image from the images of the plurality of frames captured by the image sensor (2) and the information relating to motion of the image capture apparatus during capturing of the images of the plurality of frames.
6. The image capture apparatus (1) according to any one of clauses 1 to 5, further comprising:
   detecting means (311) for detecting an object in an image;
   calculating means (308) for calculating, based on a position of a detected object detected in the images of the plurality of frames, an estimated range in which a probability that the detected object would be present in the predicted image is a predetermined value or more; and
   superimposing means (310) for superimposing an indicator indicating the estimated range on the predicted image to obtain a superimposed image, and output the superimposed image to the display control means (305).
7. The image capture apparatus (1) according to clause 6, wherein,
   if a size of the estimated range is not greater than a predetermined size, the superimposing means (310) outputs, to the display control means (305), the predicted image on which the indicator indicating the estimated range is not superimposed.
8. The image capture apparatus according to any one of clauses 1 to 7, further comprising:
   detecting means (311) for detecting an object in an image;
   predicting means (309) for predicting, based on the images of the plurality of frames and a position of a detected object detected in the predicted image, a movement trajectory of the detected object from a time corresponding to the predicted image to thereafter; and
   superimposing means (310) for superimposing an indicator indicating the movement trajectory on the predicted image to obtain a superimposed image, and output the superimposed image to the display control means (305).
9. A control method to be performed by an image capture apparatus comprising:
   an image sensor (2);
   a display device (6); and
   one or more processors (3) that generates, using a machine learning model, a predicted image based on images of a plurality of frames captured by the image sensor, the predicted image predicting an image that would be captured later than the images of the plurality of frames, the method comprising:
   generating, from an image captured by the image sensor, an image for display that is to be displayed on the display device;
   causing the display device (6) to display the image for display or the predicted image so as the display device (6) to function as an electronic viewfinder; and
   determining that the predicted image is to be generated by the generating if it is determined that an exposure time for still image capturing is longer than a predetermined time and that the predicted image is not to be generated by the generating if it is determined that the exposure time is not longer than the predetermined time.
10. A computer program executable by one or more processors, wherein the computer program, when executed by the one or more processors, causes the one or more processors to perform the image processing method according to clause 9.

## Claims

1. An image capture apparatus (1) comprising:
an image sensor (2);
a display device (6);
image processing means (306) configured to generate an image for display, wherein the image for display is generated from an image captured by the image sensor, wherein the image for display is an image that is to be displayed on the display device;
generating means (304) configured to generate, using a machine learning model, a predicted image based on images of a plurality of frames captured by the image sensor, the predicted image predicting an image that would be captured later than the images of the plurality of frames;
display control means (305) configured to cause the display device to display one of the image for display or the predicted image, wherein the display device is configured to function as an electronic viewfinder; and
determining means (303) configured to determine whether the generating means is to generate the predicted image based on an exposure time for still image capturing and a predetermined time, wherein the predicted image is to be generated by the generating means if it is determined that the exposure time is longer than a predetermined time, and wherein the predicted image is not to be generated by the generating means if it is determined that the exposure time is shorter than the predetermined time.

2. The image capture apparatus (1) according to claim 1, wherein
the display control means (305) is configured to cause the display device (6) to display the predicted image while still image capturing is being performed, and configured to cause the display device (6) to display the image for display if still image capturing is not being performed.

3. The image capture apparatus (1) according to claim 1 or claim 2, wherein
the determining means (303) is further configured to determine whether a capturing mode set in the image capture apparatus (1) is a capturing mode in which an exposure time for still image capturing is determined prior to capturing,
in a case where it is determined that the capturing mode set in the image capture apparatus (1) is the capturing mode in which the exposure time for still image capturing is determined prior to capturing,
the determining means (303) is configured to determine whether the generating means is to generate the predicted image based on the exposure and the predetermined time, wherein the predicted image is to be generated by the generating means (304) if it is determined that the exposure time is longer than a predetermined time and determines that the predicted image is not to be generated by the generating means (304) if it is determined that the exposure time is shorter than the predetermined time, and
in a case where if it is determined that the capturing mode set in the image capture apparatus (1) is not the capturing mode in which the exposure time for still image capturing is determined prior to capturing, the determining means (303) is configured to determine that the predicted image is to be generated by the generating means (304).

4. The image capture apparatus (1) according to claim 1 or claim 2, wherein
the determining means (303) is further configured to determine that the exposure time for still image capturing is longer than the predetermined time if a capturing mode in which image capturing is performed with an exposure time longer than the predetermined time is set in the image capture apparatus (1).

5. The image capture apparatus (1) according to any one of claims 1 to 4, further comprising
acquiring means (9) configure to acquire information relating to motion of the image capture apparatus (1), wherein
the generating means (304) is further configured to generate the predicted image from the images of the plurality of frames captured by the image sensor (2) and the information relating to motion of the image capture apparatus during capturing of the images of the plurality of frames.

6. The image capture apparatus (1) according to any one of claims 1 to 5, further comprising:
detecting means (311) configured to detect an object in an image;
calculating means (308) configured to calculate, based on a position of a detected object detected in the images of the plurality of frames, an estimated range in which a probability that the detected object would be present in the predicted image is a predetermined value or more; and
superimposing means (310) configured to superimpose an indicator indicating the estimated range on the predicted image to obtain a superimposed image, and output the superimposed image to the display control means (305).

7. The image capture apparatus (1) according to claim 6, wherein,
if a size of the estimated range is not greater than a predetermined size, the superimposing means (310) is configured to output, to the display control means (305), the predicted image on which the indicator indicating the estimated range is not superimposed.

8. The image capture apparatus according to any one of claims 1 to 7, further comprising:
detecting means (311) configured to detect an object in an image;
predicting means (309) configured to predict, based on the images of the plurality of frames and a position of a detected object detected in the predicted image, a movement trajectory of the detected object from a time corresponding to the predicted image to thereafter; and
superimposing means (310) configured to superimpose an indicator indicating the movement trajectory on the predicted image to obtain a superimposed image, and output the superimposed image to the display control means (305).

9. A control method to be performed by an image capture apparatus comprising:
an image sensor (2);
a display device (6); and
one or more processors (3) configured to generate images, the method comprising:
generating an image for display, wherein the image for display is generated from an image captured by the image sensor, wherein the image for display is an image that is to be displayed on the display device;
generating, using the machine learning model, a predicted image based on images of a plurality of frames captured by the image sensor, the predicted image predicting an image that would be captured later than the images of the plurality of frames;
causing the display device (6) to display one of the image for display or the predicted image, wherein the display device (6) is configured to function as an electronic viewfinder; and
determining whether to generate the predicted image based on an exposure time for still image capturing and a predetermined time, wherein the predicted image is to be generated if it is determined that the exposure time for still image capturing is longer than the predetermined time, and wherein the predicted image is not to be generated if it is determined that the exposure time is shorter than the predetermined time.

10. A computer program executable by one or more processors, wherein the computer program, when executed by the one or more processors, causes the one or more processors to perform the method according to claim 9.
